# EUROPÄISCHE PATENTSCHRIFT

(11) **EP 1 287 271 B1**
(45) Veröffentlichungstag und Bekanntmachung des Hinweises auf die Patenterteilung: **25.04.2007**
(21) Anmeldenummer: 01947343.8
(22) Anmeldetag: 06.06.2001
(51) Int. Cl.: F16D 65/00, F16D 55/00

(54) **ANBRINGUNG EINER KENNZEICHNUNG AN EINER SCHEIBENBREMSE**
APPLICATION OF AN IDENTIFYING MARK TO A DISK BRAKE
APPLICATION D'UNE MARQUE DISTINCTIVE SUR UN FREIN A DISQUE

(30) Priorität: 07.06.2000 DE 10027783
(43) Veröffentlichungstag der Anmeldung: 05.03.2003
(73) Patentinhaber: Lucas Automotive GmbH, 56070 Koblenz (DE)
(72) Erfinder: STAHL, Peter, 53474 Bad Neuenahr-Ahrweiler (DE)
(74) Vertreter: von Hellfeld, Axel
(86) Internationale Anmeldenummer: PCT/EP2001/006395
(87) Internationale Veröffentlichungsnummer: WO 2001/094805

(56) Entgegenhaltungen:
- EP-A- 0 737 823
- DE-A- 4 101 514
- DE-A- 4 208 381
- US-A- 4 609 077

## Beschreibung

Die Erfindung betrifft den Sattel einer Scheibenbremse, insbesondere den Schwimmsattel einer Schwimmsattelscheibenbremse, wobei die Möglichkeit vorgesehen ist, eine Kennzeichnung deutlich sichtbar am Schwimmsattel anzubringen.

Im Stand der Technik wird üblicherweise eine Kennzeichnung, wie z. B. eine Firma oder eine andere Markenbezeichnung, während des Gießvorganges an einer Bremse angebracht, z. B. in Form von erhaben vorstehenden Symbolen.

Es werden insbesondere bei Personenkraftwagen zunehmend Radfelgen verwendet, die aus ästhetischen Gründen als Speichenfelgen ausgebildet sind, so daß der Blick frei ist durch die Felge auf die Bremse.

Aus der DE 41 01 514 A1 ist eine Teilbelagscheibenbremse bekannt, bei der eine Blende, die die Möglichkeit bietet, von außen gut sichtbar und auswechselbar ein Firmenemblem anzubringen, auf der der Felge zugekehrten Seite des Bremssattels angeordnet ist. Die Blende ist mit Federklammern an Armen eines Bremsträger lösbar befestigt.

Der Erfindung liegt die Aufgabe zugrunde, die Möglichkeiten der Anbringung von Kennzeichnungen an Bremsen zu erweitern.

Diese Aufgabe wird durch einen Sattel einer Scheibenbremse mit den Merkmalen des Anspruches 1 gelöst. Bevorzugte Merkmale sind Gegenstand der abhängigen Ansprüche 2 bis 8. Hierzu wird ein Sattel einer Scheibenbremse erfindungsgemäß auf seiner fahrzeugäußeren Seite so geformt, daß eine Kennzeichnung am Schwimmsattel befestigbar ist. Besonders geeignet ist wegen der beengten Platzverhältnisse die Erfindung für den Schwimmsattel einer Schwimmsattelscheibenbremse. Ebenfalls einsetzbar ist die Erfindung bei einem Bremsträger einer Sattelbremse, insbesondere einer Schwimmsattelbremse.

Bevorzugt wird erfindungsgemäß der Schwimmsattel einer Scheibenbremse auf seiner fahrzeugäußeren Seite eben bearbeitet, so daß eine Platte mit einer Kennzeichnung stabil befestigbar ist.

Die fahrzeugäußere Seite des Sattels ist von außen durch eine Speichenfelge hindurch gut sichtbar. Gemäß einer bevorzugten Ausgestaltung der Erfindung erstreckt sich die plan bearbeitete Fläche auf der fahrzeugäußeren Seite des Sattels über die gesamte Umfangsfläche der Bremse, d. h. im wesentlichen von der Einlaufseite zur Auslaufseite der Bremse. Die Platte mit der Kennzeichnung liegt im montierten Zustand im wesentlichen parallel zur Hauptebene der Bremsscheibe, d. h. die Achse der Bremsscheibe steht senkrecht auf der Ebene der Platte. Bei der Platte handelt es sich bevorzugt um ein Blechteil oder eine Kunststoffplatte, die mit einer Kennzeichnung versehen ist, z. B. der Marke oder der Typenbezeichnung oder einem anderen charakteristischen Symbol des Fahrzeugherstellers oder des Bremsenherstellers.

Die vorstehend beschriebene ebene Bearbeitung der Außenseite des Sattels ist so gestaltet, daß die Platte paßgenau an einer radial äußeren Kante des Sattels geführt und positioniert ist. Beim Bearbeiten des Sattels zur Erzeugung der ebenen Fläche, gegen die die Platte angedrückt wird, kann die vorstehend genannte Kante in einfacher Weise am gegossenen Sattel stehenbleiben, d. h. in einem einzigen Arbeitsgang kann mittels einer Fräse die Stirnseite (fahrzeugäußere Seite) des Sattels plan gefräst werden, wobei radial außen eine Anschlagskante für die Platte stehenbleibt.

Besonders bevorzugt wird der Erfindungsgedanke bei einem Sattel, insbesondere Schwimmsattel, mit sich parallel zur Ebene der Bremsscheibe erstreckenden Brückenfingern eingesetzt, die auf der fahrzeugäußeren Seite mit ebenen Stirnflächen versehen werden, wobei diese Stirnflächen in einer einzigen Ebene liegen. Die Platte mit der Kennzeichnung kann dann über diese ebenen Stirnflächen der Brückenfinger gelegt und befestigt werden, d. h. sie überbrückt alle Brückenfinger von der Einlaufseite zur Auslaufseite der Bremse. Auch dabei verläuft die Platte mit der Kennzeichnung zumindest annähernd parallel zur Ebene der Bremsscheibe.

Bevorzugte Befestigungen der Platte am Sattel sehen Nieten oder Kerbnägel vor. Auch eine Klebung kann zusätzlich vorgesehen sein. Besonders bevorzugt ist die Verwendung von federnden Klammern, mit denen die Platte bei der Montage in einfacher weise positionierbar ist.

Insbesondere bei Schwimmsattelbremsen hat die Erfindung den Vorteil, daß eine relativ große Fläche von 60 bis über 100 cm² zur Verfügung gestellt werden kann, um eine entsprechend große Platte mit einer Beschriftung als Kennzeichnung anzubringen. Eine derart große Kennzeichnung, die von außen am Fahrzeug gut sichtbar ist, war bisher bei Schwimmsattelbremsen nicht möglich.

Es ist auch ein Verfahren zum Ausgestalten eines Sattels beschrieben, insbesondere eines Schwimmsattels einer Scheibenbremse, derart, bei dem eine Platte mit einer Kennzeichnung in einfacher Weise so an der Bremse angebracht werden kann, daß sie gut von außen optisch wahrnehmbar ist. Hierzu wird die fahrzeugäußere Seite des Sattels mit einer Fräse plan bearbeitet, und zwar bevorzugt durchgehend von der Einlaufseite zur Auslaufseite der Bremse. Dabei läuft die Fräse über einen Bereich, der etwa dem Wirkbereich der Bremsscheibe entspricht, allerdings außenseitig des Bremssattels.

Nachfolgend wird ein Ausführungsbeispiel der Erfindung anhand der Zeichnung näher erläutert. Es zeigt:
- Figur 1: in perspektivischer Darstellung eine Scheibenbremse mit dem Bremsträger; und
- Figur 2: den Schwimmsattel in perspektivischer Explosionsdarstellung mit einer Platte, die eine Kennzeichnung trägt.

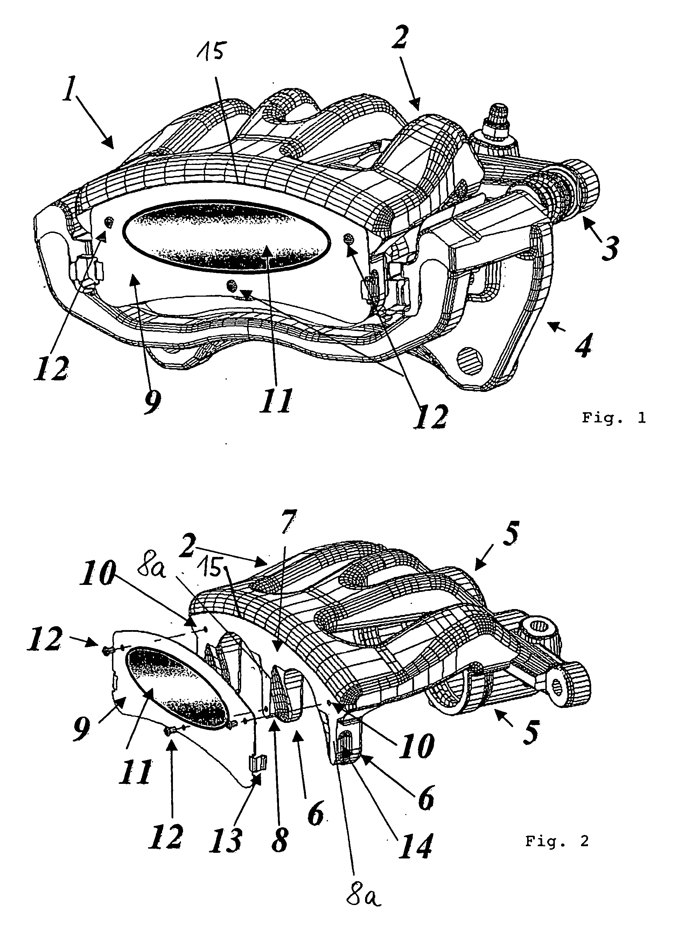

Gemäß Figur 1 weist eine Scheibenbremse 1 (deren Bremsscheibe nicht dargestellt ist) einen Schwimmsattel 2 auf, der mittels einer Bolzenführung 3 an einem fahrzeugfesten Bremsträger 4 so befestigt ist, daß der Schwimmsattel 2 in bekannter Weise in axialer Richtung (Achse der Bremsscheibe) bewegbar ist.

Beim dargestellten Ausführungsbeispiel sind zwei Betätigungszylinder 5 (Figur 2) vorgesehen, um auf der fahrzeuginneren Seite der Bremse einen Bremsbacken (nicht gezeigt) in Anlage an die Bremsscheibe (nicht gezeigt) bringen zu können.

Als Reaktion darauf bewegt sich der Schwimmsattel so, daß der zweite Bremsbacken, der auf der äußeren Seite 7 (Figur 2) des Sattels angeordnet ist, in entgegengesetzter Richtung ebenfalls auf die Bremsscheibe zubewegt wird.

Auf der fahrzeugäußeren Seite 7 weist der Schwimmsattel 2 drei Brückenfinger 6 auf, die in Figur 2 zu erkennen sind. Die Brückenfinger 6 stützen auf ihrer Innenseite den äußeren Bremsbacken (nicht gezeigt) ab und sind auf ihrer fahrzeugäußeren Seite (in Figur 2 links) mit planen (ebenen) Flächen 8a versehen. Die fahrzeugäußeren Stirnflächen 8a der einzelnen Brückenfinger 6 liegen alle in einer einzigen Ebene, die im wesentlichen parallel verläuft zur Ebene der Bremsscheibe. Von den Brückenfingern 6, erstrecken sich in Richtung auf die fahrzeugäußere Seite Stege 8, die im Vergleich mit den jeweils zugeordneten Brückenfingern verjüngt sind, d. h. in Umfangsrichtung der Bremse geringere Abmessungen haben als die Brückenfinger selbst. Hierdurch wird Gewicht eingespart und gleichwohl eine Abstützung für eine zu befestigende Platte 9 erreicht, die sich über einen großen Umfangsbereich der Bremse erstreckt.

Die Platte 9 kann z. B. aus einem geeigneten Blech oder Kunststoff bestehen. Sie trägt eine Kennzeichnung 11, die z. B. die Marke des Fahrzeugherstellers, eine Typenbezeichnung oder auch eine Bremsenbezeichnung sein kann. Die Platte 9 entspricht hinsichtlich ihrer Kontur im wesentlichen der Kontur des Sattels, in axialer Richtung gesehen, wie sich aus den Figuren 1 und 2 ergibt. Mit anderen Worten: die Platte 9 erstreckt sich beim dargestellten Ausführungsbeispiel im wesentlichen über den gesamten Umfang des Bremssattels von der Einlaufseite (in Figuren 1 und 2 z. B. rechts) bis zur Auslaufseite (in Figuren 1 und 2 z. B. links). Weiterhin erstreckt sich die Platte im wesentlichen über fast die gesamte Höhe des Sattels in Richtung parallel zur Bremsscheibe (in den Figuren 1 und 2 also von unten nach oben).

Die Platte 9 wird also auf die völlig planen, in einer einzigen Ebene liegenden Stirnflächen 8a der Brückenfinger 6 montiert, und zwar mit Hilfe von Bohrungen 10 und Kerbnägeln 12, die durch Löcher in der Platte 9 in die Bohrungen eingedrückt werden.

Die ebenen, fahrzeugaußenseitigen Stirnflächen 8a der Brückenfinger 6 werden z. B. mit einer Fräse hergestellt, die in Umfangsrichtung über den zuvor in Gießtechnik hergestellten Schwimmsattel geführt wird. Dabei läßt die Fräse bevorzugt auf der radial äußeren Seite des Schwimmsattels eine Kante 15 stehen, gegen die die Platte 9 im Einbauzustand anstößt. Dies erleichtert den genauen Einbau der Platte 9 und fördert seine stabile Positionierung.

Weiter erleichtert wird die Montage der Platte 9 am Sattel dadurch, daß am einlaufseitigen Brückenfinger 6 und am auslaufseitigen Brückenfinger jeweils kleine Vertiefungen (Taschen) 14 eingeformt werden. Federnde Klammern 13 greifen rastend in die Vertiefungen 14 ein und befestigen, zusätzlich zu den Kerbnägeln 12, die Platte 9 am Sattel 2.

Die vorstehend beschriebene Herstellung einer sich im wesentlichen von der Einlaufseite zur Auslaufseite der Bremse erstreckenden Abstützung für eine zu befestigende Platte 9 mit einem Werbeaufdruck oder dergleichen kann auch analog bei einem Bremsträger 4 gemäß Figur 1 eingesetzt werden, d. h. es wird am Gußteil des Bremsträgers eine Fläche plan gefräst und darauf analog zur obigen Beschreibung eine Platte befestigt. Die Platte am Bremsträger kann auch gewinkelt ausgeführt sein, z. B. etwa U-förmig derart, daß sie mit einem Schenkel am Bremsträger befestigt ist und der andere Schenkel der U-Form parallel zur Bremsscheibe soweit vorsteht, daß eine auf ihm außenseitig angebrachte Kennzeichnung genauso gut sichtbar ist wie eine Kennzeichnung direkt auf der Außenseite des Sattels.

Die Kennzeichnung 11 auf der Platte 9 kann in verschiedener Weise vorgenommen werden, z. B. mittels Lackierung. Auch eine Prägung und Färbung bzw. Lackierung ist möglich.

Zusätzlich zur dargestellten Befestigung mit Kerbnägeln 12 oder Nieten oder dergleichen und gegebenenfalls federnden Klammern 13 kann die Platte 9 auch mittels eines Klebers befestigt werden. Der Kleber selbst kann dämpfende Eigenschaften haben, um auch nach langem Gebrauch der Bremse ein Klappern der Platte zu vermeiden. Auch kann die Platte 9 mit einer schwingungsdämpfenden Beschichtung versehen sein.

## Patentansprüche

1. Sattel (2) einer Scheibenbremse, der auf seiner fahrzeugäußeren Seite (7) so geformt ist, dass eine Kennzeichnung (9, 11) am Sattel befestigbar ist, umfassend parallel zur Ebene der Bremsscheibe sich erstreckende Brückenfinger (6), die auf der fahrzeugäußeren Seite (7) ebene Stirnflächen (8a) aufweisen, die in einer einzigen Ebene liegen, die parallel ist zur Ebene der Bremsscheibe, und die Kennzeichnung (9, 11) an den Stirnflächen (8a) anbringbar ist, **dadurch gekennzeichnet, dass** an der radial äußeren Seite des Sattels (2) eine Kante (15) vorgesehen ist, an die die Kennzeichnung (9, 11) im angebrachten Zustand anstößt.

2. Sattel nach Anspruch 1, mit einer ebenen Bearbeitung seiner fahrzeugäußeren Seite (7) im wesentlichen über die gesamte Umfangsfläche des Sattels.

3. Sattel nach Anspruch 1, **dadurch gekennzeichnet, dass** die ebenen Stirnflächen (8a) auf Stegen (8) liegen, die integral mit den Brückenfingern (6) ausgeformt sind und eine geringere Breite in Umfangsrichtung der Bremse haben als die Brückenfinger (6).

4. Sattel nach einem der Ansprüche 2 bis 3, **dadurch gekennzeichnet, dass** die Platte (9) mit Nieten oder Kerbnägeln am Sattel befestigt ist.

5. Sattel nach einem der vorhergehenden Ansprüche, **dadurch gekennzeichnet, dass** die Platte durch eine Klebung gehalten ist.

6. Sattel nach einem der vorhergehenden Ansprüche, **dadurch gekennzeichnet, dass** zwischen der Platte (9) und dem Sattel eine schwingungsdämpfende Schicht oder Folie vorgesehen ist.

7. Sattel nach einem der vorhergehenden Ansprüche, **dadurch gekennzeichnet, dass** die Platte (9) mittels zumindest einer federnden Klammer (13) in bezug auf den Sattel positioniert ist.

8. Sattel nach einem der Ansprüche 1 bis 7, **dadurch gekennzeichnet, dass** es ein Schwimmsattel einer Schwimmsattelscheibenbremse ist.

## Claims

1. Calliper (2) of a disc brake which is shaped at its vehicle outer side (7) such that a label (9, 11) is attachable to the calliper, said calliper comprising bridge fingers (6) extending parallel to the plane of the brake disc and having planar front faces (8a) at the vehicle outer side (7), said front faces (8a) being located in a single plane parallel to the plane of the brake discs, wherein the label (9, 11) is attachable to the front faces (8a), **characterized in that** an edge (15) which the label (9, 11) abuts in the attached state is provided on the radial outer side of the calliper (2).

2. Calliper according to claim 1, having a planar finishing on its vehicle outer side (7) substantially over the entire circumferential surface of the calliper.

3. Calliper according to claim 1, **characterized in that** the planar front faces (8a) rest on webs (8) that are formed integrally with the bridge fingers (6) and have a lesser width in the circumferential direction of the brake than the bridge fingers (6).

4. Calliper according to one of claims 2 to 3, **characterized in that** the plate (9) is fastened to the calliper by means of rivets or grooved drive studs.

5. Calliper according to one of the preceding claims, **characterized in that** the plate is held by adhesion.

6. Calliper according to one of the preceding claims, **characterized in that** a vibration reducing layer or film is provided between the plate (9) and the calliper.

7. Calliper according to one of the preceding claims, **characterized in that** the plate (9) is positioned relative to the calliper by means of at least one resilient clip (13).

8. Calliper according to one of claims 1 to 7, **characterized in that** it is a floating calliper of a floating calliper disc brake.

## Revendications

1. Etrier (2) d'un frein à disque, qui est formé de façon telle sur son côté tourné vers l'extérieur du véhicule (7) qu'un élément d'identification (9, 11) peut être fixé à l'étrier, comprenant des doigts en pont (6) s'étendant parallèlement au plan du frein à disque et qui présentent des faces frontales planes (8a) sur le côté tourné vers l'extérieur du véhicule (7), lesquelles faces se trouvent dans un seul et même plan qui est parallèle au plan du frein à disque, et que l'élément d'identification (9, 11) peut être fixé aux faces frontales (8a), **caractérisé en ce que** sur le côté radialement extérieur de l'étrier (2) est prévu un bord (15) contre lequel bute l'élément d'identification (9, 11) à l'état de fixation.

2. Etrier selon la revendication 1, avec un façonnage plat de son côté tourné vers l'extérieur du véhicule (7) quasiment sur toute la face périphérique de l'étrier.

3. Etrier selon la revendication 1, **caractérisé en ce que** les faces frontales planes (8a) reposent sur des branches (8), qui sont formées en une seule pièce avec les doigts en pont (6) et présentent une plus petite largeur que les doigts en pont (6) dans la direction périphérique.

4. Etrier selon l'une quelconque des revendications 2 à 3, **caractérisé en ce que** la plaque (9) est fixée à l'étrier avec des rivets ou des clous cannelés.

5. Etrier selon l'une quelconque des revendications précédentes, **caractérisé en ce que** la plaque est maintenue par un collage.

6. Etrier selon l'une quelconque des revendications précédentes, **caractérisé en ce qu'**une couche ou une feuille amortissant les vibrations est prévue entre la plaque (9) et l'étrier.

7. Etrier selon l'une quelconque des revendications précédentes, **caractérisé en ce que** la plaque (9) est positionnée par rapport à l'étrier par l'intermédiaire d'au moins un clip élastique (13).

8. Etrier selon l'une quelconque des revendications 1 à 7, **caractérisé en ce qu'**il s'agit d'un étrier flottant d'un frein à disque à étrier flottant.
